# EUROPEAN PATENT SPECIFICATION

(11) **EP 3 744 633 B1**
(45) Date of publication and mention of the grant of the patent: **15.12.2021**
(21) Application number: 19400012.1
(22) Date of filing: 27.05.2019
(51) Int. Cl.: B64C 27/00, B62D 33/06, F16F 15/023, F16F 15/02, F16F 15/00

(54) **A VIBRATION DAMPENING STRUCTURE FOR A ROTARY WING AIRCRAFT**
VIBRATIONSDÄMPFUNGSSTRUKTUR FÜR EIN DREHFLÜGELFLUGZEUG
STRUCTURE D'AMORTISSEMENT DE VIBRATIONS POUR UN AÉRONEF À VOILURE TOURNANTE

(43) Date of publication of application: 02.12.2020
(73) Proprietor: AIRBUS HELICOPTERS DEUTSCHLAND GmbH, 86609 Donauwörth (DE)
(72) Inventor: LE CADET, Yann, D-86707 Westendorf (DE); PELLERIN, Samuel, D-86609 Donauworth (DE)
(74) Representative: GPI Brevets

(56) References cited:
- EP-A2- 0 368 607
- CN-A- 107 202 748
- CN-A- 109 058 371
- CN-A- 109 273 963
- KR-B1- 101 888 762
- US-A- 5 887 858
- US-B1- 6 340 153

## Description

The present invention is related to a vibration dampening structure for dampening vibrations occurring during operation of a rotary wing aircraft.

Rotary wing aircrafts, and in particular helicopters, are widely used in civil, parapublic and military missions. However, in particular mission scenarios, such as e. g. medical missions, camera shooting missions or sniper missions, vibrations that are induced during operation of a given helicopter by the helicopter's main rotor into the helicopter's fuselage present a great challenge for a required execution precision of a respective mission. By way of example, such vibrations usually complicate on board treatments of patients by doctors and paramedics during medical transports, impede adequate camera shootings and prevent precise operation of weapon systems and exact shooting of snipers.

In other words, all these mission scenarios necessitate provision of an operating platform that needs to be as stable as possible in order to allow for a respectively required execution precision. However, provision of such an operating platform in a flying helicopter is a difficult and complex task as it requires an at least significant dampening of the above-mentioned vibrations in an environment with restricted ergonomics provided by the helicopter's cabin.

Document US6340153 discloses a vibration dampening structure using pistons.

Document WO 2017/179160 A1 describes a vibration dampening structure of an unmanned aircraft, which has a simple, lightweight, and small configuration, and which can be manufactured at low cost. This vibration dampening structure is capable of vibration dampening of an object to be vibration-dampened, even if complicated vibration specific to unmanned aircrafts occurs. More specifically, for vibration dampening of an object that is to be mounted in a vibration-dampened manner on an unmanned aircraft, the vibration dampening structure is equipped with two or more viscous-fluid-filled dampers, each comprising a support shaft supporting the object to be vibration-dampened, an elastic body provided around the support shaft, and viscous fluid filled in the elastic body. The object to be vibration-dampened is fixed to the unmanned aircraft in such a manner that the object to be vibration-dampened is horizontally sandwiched by the viscous-fluid-filled dampers fixed to the unmanned aircraft when the unmanned aircraft is in a horizontal orientation.

However, this vibration dampening structure is not suitable for use in a manned aircraft for providing a stable operating platform, in particular in a rotary wing aircraft, which enables obtention of a respectively required execution precision e. g. in medical missions, camera shooting missions or sniper missions.

Document EP 3 264 523 A1 describes a spatial stabilization apparatus with a vibration suppression mechanism that is configured to suppress vibrations occurring in an apparatus, such as an antenna and an associated antenna driving mechanism, that is installed in an aircraft. The vibration suppression mechanism is disposed between the aircraft's airframe and an assembled unit of the antenna and the associated antenna driving mechanism, and supports the associated antenna driving mechanism and the antenna. More specifically, the vibration suppression mechanism is an active vibration suppression apparatus that includes a vibration suppression spring and a vibration suppression actuator, and it suppresses vibrations that occur in the associated antenna driving mechanism and the antenna as a consequence of vibrations that are transferred from the aircraft's airframe.

However, in this spatial stabilization apparatus the vibration suppression mechanism is provided with the vibration suppression actuator that is actively driven via control of an associated control unit. Thus, this vibration suppression mechanism is complex and expensive and requires a multiplicity of constituting components that require extensive maintenance.

Document KR 10-2017-0103317 A describes a focus position stabilization support of a camera, which is installed inside of an aircraft for manned aerial photographing. The focus position stabilization support includes a vibration absorbing portion which is disposed in such a manner as to absorb vibrations transmitted from the aircraft while supporting a body of the focus position stabilization support from below. More specifically, the vibration absorbing portion has a multi-stage structure in which an upper end is configured to be able to move in and out of a lower end. The vibration absorbing portion includes a first vibration absorbing rubber inserted in the upper end, and a second vibration absorbing rubber disposed under the first vibration absorbing rubber. Furthermore, a shock absorber with a piston rod and an absorption cap are provided. The absorption cap is made of, or filled with, a highly viscous material such as silicone, oil, gel or the like, and a plurality of protruding balls are provided below the absorption cap. When the piston rod of the shock absorber is lowered by a momentary impact, the absorption cap is moved downward by the piston rod and the protruding balls penetrate the absorption cap while supporting the absorption cap from below, thus, absorbing the shock. The vibration absorbing portion may absorb the fine vibration portion of the vibration transmitted from the aircraft through the first vibration absorbing rubber, the second vibration absorbing rubber and the absorption cap. Large transmitted vibration is absorbed through the shock absorber and the movement of the piston rod through the absorption cap.

While this focus position stabilization support with the vibration absorbing portion is suitable for use with small objects, cameras, it is not suitable for providing a comparatively large stable operating platform in a rotary wing aircraft that enables obtention of a respectively required execution precision e. g. in medical missions, or sniper missions.

Document US 5,887,858 A describes a mount that accommodates a conventional mount (such as an air mount) so as to include, at the mount's foundation-securing plate, at least one motion sensor and at least one vibratory actuator. Each sensor is correlated with an actuator. For each sensor-actuator pair, the electrical feedback loop includes generation by the sensor of a signal resulting from the local vibration of the foundation-securing plate, generation by a processor/controller of a signal derived from the sensor's signal, and exertion upon the foundation-securing plate by the sensor's paired actuator of a vibratory force commanded by the processor/controller's signal.

Document EP 0 368 607 A2 describes a vibration damping apparatus for transportation that includes a vertical direction damping means having air springs and air dampers arranged in parallel on a base, and horizontal direction damping means of laminated rubbers. The vertical and horizontal damping means are combined in series for supporting a load base.

Document CN 109 273 963 A describes a pin device of a novel connector that includes a support plate, and two ends of the surface of the support plate are symmetrically connected with a left support frame and a right support frame, and a top plate is connected to a top end of the left support frame and right support frame. A lower part of the support plate is provided with a base, and a plurality of piston cylinders is arranged in a uniform equidistant matrix in the upper surface of the base. One end of the bottom of the piston cylinder is connected with a piston rod, and the other end of the piston rod penetrates the top of the piston cylinder and extends upwardly and is connected to the lower surface of the support plate.

Document KR 10-2018-0068770 A describes a mounting apparatus for a sniper rifle, which is mounted in an aircraft, e. g. a helicopter, such that vibrations transferred from the aircraft can be buffered and snipers implementing shooting assignments are able to perform precise shooting. Furthermore, the mounting apparatus permits to quickly convert the direction toward a shooting target. Moreover, a chair module portion is provided such that a stable shooting posture in accordance with a body shape of a respective sniper can be maintained. In addition, depending on a respective kind of sniper rifle, a replaceable holding portion is provided such that one mounting portion is able to hold various kinds of sniper rifles. More specifically, the mounting apparatus includes a base plate portion that is detachably mounted on a floor space of an aircraft and a chair module that is coupled to an upper portion of the base plate portion. In particular, the chair module is pivotally mounted on the upper portion of the base plate portion and coupled to a vibration dampener which is provided for buffering vibrations transmitted from the aircraft. Furthermore, a mounting part is located in front of the chair module part and a respective sniper gun can be mounted thereon. The vibration dampener is provided, for example, as a hydraulic cylinder or a pneumatic cylinder structure. Furthermore, a cushioning panel, such as an air spring, may be provided on a bottom surface of the aircraft for buffering vibrations transmitted from the bottom surface.

However, in this mounting apparatus the mounting part and the chair module may move relative to each other, as both are independent from each other. Thus, only a limited use of this mounting apparatus in sniper missions for enabling a respectively required execution precision is conceivable. Furthermore, the mounting part is not suitable for providing a stable operating platform in a rotary wing aircraft that enables obtention of a respectively required execution precision e. g. in medical missions.

Document US 2013/000477 A1 describes an apparatus for dampening vibration forces being transmitted from a moving vehicle, such as a helicopter, to a firearm mount and firearm to permit substantially vibration free aiming and firing of the firearm from the moving vehicle. More specifically, a support member supports a pliable membrane and permits flexing movement of a region of the membrane in response to vibration forces. A firearm mount is secured to a flexing region of the membrane. Vibration forces transmitted from the vehicle to the firearm mount are dampened by flexing of the membrane due to the mass of the firearm thereby permitting the firearm to remain stabilized for accurate aiming and firing.

However, as a result of the provision of the flexing membrane, this apparatus for dampening vibration forces takes only vertical loads into account. Furthermore, a respective seat or location of a respective shooter or sniper may move relative to the apparatus for dampening vibration forces, as both are independent from each other. Thus, only a limited use of this apparatus for dampening vibration forces in sniper missions for enabling a respectively required execution precision is conceivable. Furthermore, the apparatus for dampening vibration forces is not suitable for providing a stable operating platform in a rotary wing aircraft that enables obtention of a respectively required execution precision e. g. in medical missions or camera shooting missions.

It is, therefore, an object of the present invention to provide a new vibration dampening structure for dampening vibrations occurring during operation of a rotary wing aircraft, in particular such that a stable operating platform may be provided for the rotary wing aircraft which enables obtention of a respectively required execution precision in various mission scenarios of the rotary wing aircraft, such as e. g. medical missions, camera shooting missions or sniper missions.

This object is solved by a vibration dampening structure for dampening vibrations occurring during operation of a rotary wing aircraft, the vibration dampening structure comprising the features of claim 1.

More specifically, according to the present invention a vibration dampening structure for dampening vibrations occurring during operation of a rotary wing aircraft comprises a floating body and a floating body support structure that supports the floating body. The floating body support structure comprises a mounting device that is rigidly mountable to the rotary wing aircraft, and a pneumatic shock absorber system that couples the floating body to the mounting device and dampens the vibrations occurring during operation of the rotary wing aircraft for stabilizing the floating body relative to the mounting device, whereby the pneumatic shock absorber system comprises a plurality of pneumatic shock absorbers, wherein a subset of pneumatic shock absorbers of the plurality of pneumatic shock absorbers is provided for each one of three Cartesian coordinate directions for dampening vibrations in a respective one of the three Cartesian coordinate directions. At least one of the plurality of pneumatic shock absorbers comprises a piston with a sealing member and an associated piston cup. The piston and the associated piston cup form a vibration dampening air-bed layer. The floating body support structure further comprises a retaining frame that is coupled to the mounting device via a first predetermined number of pneumatic shock absorbers of the pneumatic shock absorber system. The first predetermined number of pneumatic shock absorbers is provided for a first Cartesian coordinate direction of three Cartesian coordinate directions for dampening vibrations in the first Cartesian coordinate direction. The floating body support structure further comprises a floating body accommodation that is coupled to the retaining frame via a second predetermined number of pneumatic shock absorbers of the pneumatic shock absorber system. The second predetermined number of pneumatic shock absorbers is provided for a second Cartesian coordinate direction of the three Cartesian coordinate directions for dampening vibrations in the second Cartesian coordinate direction.

According to one aspect, the vibration dampening structure provides a floatable platform with a floating body that is decoupled from vibrations occurring during operation of an associated rotary wing aircraft by means of the pneumatic shock absorber system. Advantageously, the pneumatic shock absorber system is embodied by a piston-type dampening mechanism that forms a plurality of piston-type dampers with associated vibration dampening air-bed layers. Thus, the pneumatic shock absorber system enables floating of the floating body of the vibration dampening structure relative to the associated rotary wing aircraft.

Preferably, the floating body support structure comprises at least one fixable component that may be rigidly fixed to an associated rotary wing aircraft, e. g. to a floor structure of the associated rotary wing aircraft, for instance by means of a predetermined number of screws, bolts, rivets or any other suitable fixation means. Thus, the inventive vibration dampening structure is fast and easy to install.

The at least one fixable component is linked to the floatable platform via intermediary mechanisms which respectively define associated vibration dampening sub-assemblies. Each such sub-assembly is linked to another sub-assembly via a plurality of air-bed layers oriented in two different Cartesian coordinate directions such that in each Cartesian coordinate direction one or more air-bed layers are provided.

All air-bed layers, i. e. the respective piston-type dampers, form together the pneumatic shock absorber system which, thus, preferably has one or more piston-type dampers in each Cartesian coordinate direction. Accordingly, the vibrations occurring during operation of the associated rotary wing aircraft may be compensated, thus, allowing to lie, sit, crouch or stand on the floatable platform while remaining in a relatively stable position.

Advantageously, a respective shaping of the floatable platform is customizable at least for ergonomic purposes. In particular, the floatable platform may be embodied such that a huge ergonomic improvement may be obtained.

According to one aspect, the floatable platform comprises solid foam or any other soft material, such that the inventive vibration dampening structure may be very light compared to its size. Advantageously, the floatable platform may be embodied as a floatable mat. This allows e. g. laying on a comfortable surface which will remove the vibrations of the rotary wing aircraft so that all movements executed on the floatable mat will be more precise.

Preferably, at least one of the first predetermined number of pneumatic shock absorbers comprises a piston with a sealing member and an associated piston cup. The piston and the associated piston cup form a vibration dampening air-bed layer.

Preferably, at least one of the second predetermined number of pneumatic shock absorbers comprises a piston with a sealing member and an associated piston cup. The piston and the associated piston cup form a vibration dampening air-bed layer.

The floating body may be coupled to the floating body accommodation via a third predetermined number of pneumatic shock absorbers of the pneumatic shock absorber system. The third predetermined number of pneumatic shock absorbers is provided for a third Cartesian coordinate direction of the three Cartesian coordinate directions for dampening vibrations in the third Cartesian coordinate direction.

Preferably, at least one of the third predetermined number of pneumatic shock absorbers comprises a piston with a sealing member and an associated piston cup. The piston and the associated piston cup form a vibration dampening air-bed layer.

According to one aspect, at least one floating body retainer is provided that retains the floating body in the floating body accommodation.

According to one aspect, the floating body is connected to at least one lateral support that is provided to enable a vibration-free support of associated equipment. Examples for a suitable equipment are e. g. a camera or a sniper gun.

The floating body may be connected to a first and a second lateral support which are interconnected via a flexible string. The flexible string is provided to enable the vibration-free support of associated equipment.

Advantageously, the flexible string, or any other suitable support such as e. g. a belt, may easily and fast be adapted to the floating body, thus, offering a certain choice to respective operators.

The floating body may comprise a floating platform that is mounted to an associated support plate. The associated support plate is provided with two mounting flanges, the first and second lateral supports being attached to the mounting flanges.

The floating platform may comprise a soft material, preferably foam.

According to one aspect, the mounting device comprises a mounting platform that is provided with a plurality of mounting flanges. The plurality of mounting flanges is rigidly mountable to the rotary wing aircraft.

Preferred embodiments of the invention are outlined by way of example in the following description with reference to the attached drawings. In these attached drawings, identical or identically functioning components and elements are labeled with identical reference numbers and characters and are, consequently, only described once in the following description.
- Figure 1 shows a perspective view of a rotary wing aircraft and an enlarged perspective view of a section of the rotary wing aircraft that is provided with a vibration dampening structure according to one aspect,
- Figure 2 shows a perspective view of the vibration dampening structure of Figure 1,
- Figure 3 shows a perspective view of a mounting device of the vibration dampening structure of Figure 2,
- Figure 4 shows a perspective view of a retaining frame of the vibration dampening structure of Figure 2,
- Figure 5 shows a perspective view of a floating body accommodation of the vibration dampening structure of Figure 2,
- Figure 6 shows a perspective view of a floating body of the vibration dampening structure of Figure 2,
- Figure 7 shows a sectional view of the vibration dampening structure of Figure 2, seen along section lines VII-VII of Figure 2, and
- Figure 8 shows another sectional view of the vibration dampening structure of Figure 2, seen along section lines VIII-VIII of Figure 2.

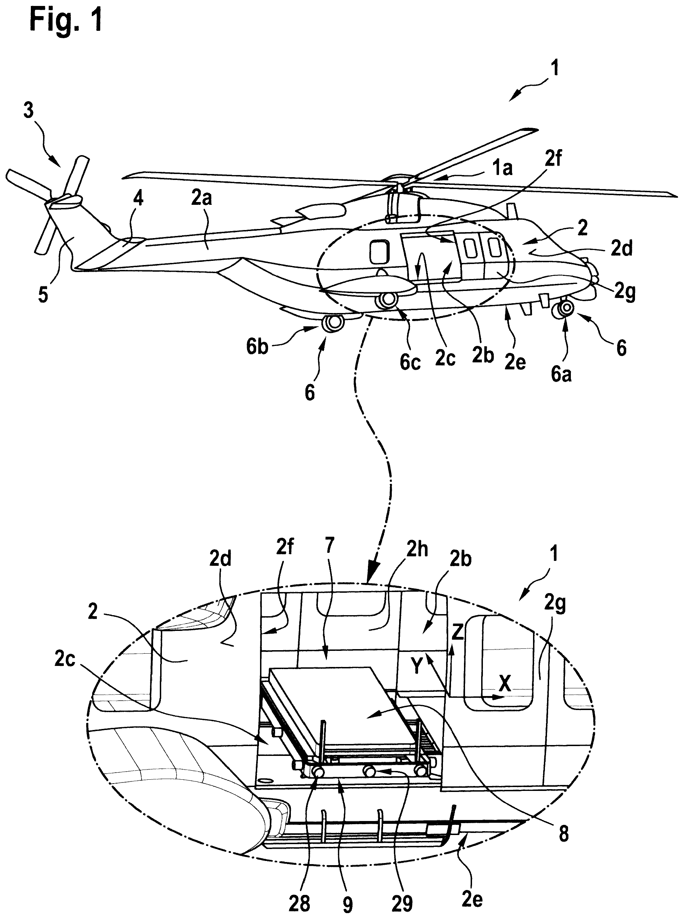

Figure 1 shows a rotary wing aircraft 1 and an enlarged detail thereof. The rotary wing aircraft 1 is by way of example embodied, and therefore hereinafter for simplicity also referred to, as a helicopter.

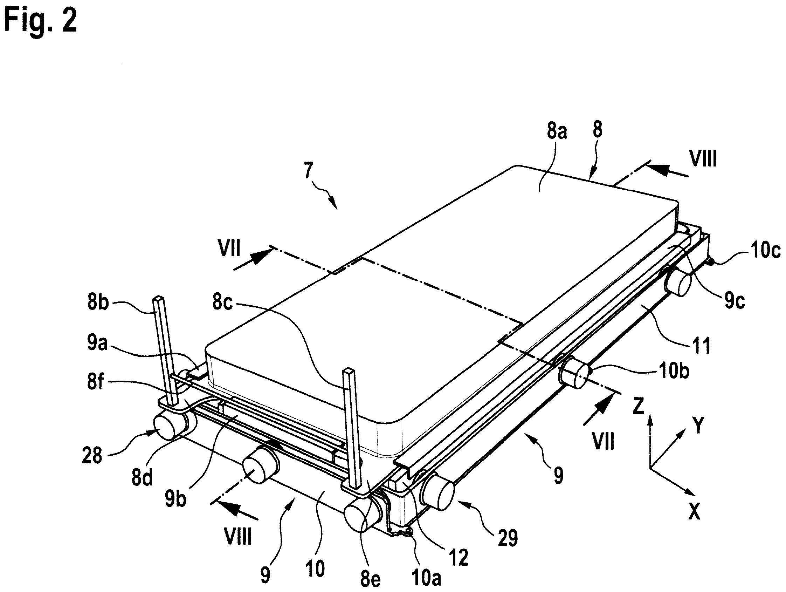

For purposes of illustration, the helicopter 1 is shown with a Cartesian coordinate system having X-, Y-, and Z-axes, which is also used in Figure 2 to Figure 8 as reference basis, but not for limiting the present invention thereto. The X-axis extends in longitudinal direction of the helicopter 1 and may also be referred to as longitudinal axis or length axis. The Y-axis extends in transversal direction of the helicopter 1 and may also be referred to as transversal axis, lateral axis, or width axis. The Z-axis extends in vertical direction of the helicopter 1 and may also be referred to as vertical axis or height axis.

The helicopter 1 illustratively comprises a fuselage 2 with a bottom shell 2e and a starboard side wall 2d that is provided with a starboard side sliding door opening 2f. The latter may be closed by means of an associated starboard side sliding door 2g.

On the helicopter's portside, the fuselage 2 preferably comprises a portside wall that may be provided with a portside sliding door opening. The latter may be closed by means of an associated portside sliding door 2h. The fuselage 2 exemplarily further comprises a tail boom 2a and a cabin 2b with a cabin floor 2c.

The helicopter 1 illustratively comprises a landing gear 6, which is exemplarily embodied as a wheel-type landing gear that comprises associated landing gear nose wheels 6a, a portside rear wheel 6b and a starboard side rear wheel 6c. The helicopter 1 illustratively further comprises at least one main rotor 1a configured to provide lift and forward or backward thrust during operation, and at least one counter-torque device 3 configured to provide counter-torque during operation, i. e. to counter the torque created by rotation of the at least one main rotor 1a for purposes of balancing the helicopter 1 in terms of yaw.

The at least one counter-torque device 3 is illustratively provided at an aft section of the tail boom 2a, which preferably further comprises a tail wing 4 and a fin 5. The tail wing 4 is preferably adjustable in its inclination and can, thus, overtake the functioning of a horizontal stabilizer. Alternatively, or in addition, the helicopter 1 may be provided with a suitable horizontal stabilizer.

However, it should be noted that the at least one counter-torque device 3, the tail wing 4 as well as the fin 5 provided at the aft section of the tail boom 2a are merely described for illustrating one exemplary embodiment of the helicopter 1, but not for limiting the invention accordingly. Instead, the present invention as described hereinafter may likewise be applied to any helicopter, independent of a respective construction of the aft section thereof.

According to one aspect, the helicopter 1 is provided with a vibration dampening device 7. The latter is preferably provided for dampening vibrations occurring during operation of the helicopter 1.

The vibration dampening device 7 comprises a floating body 8 that is supported by an associated floating body support structure 9. The associated floating body support structure 9 is preferably rigidly and preferentially removably mounted to the cabin floor 2c of the helicopter 1.

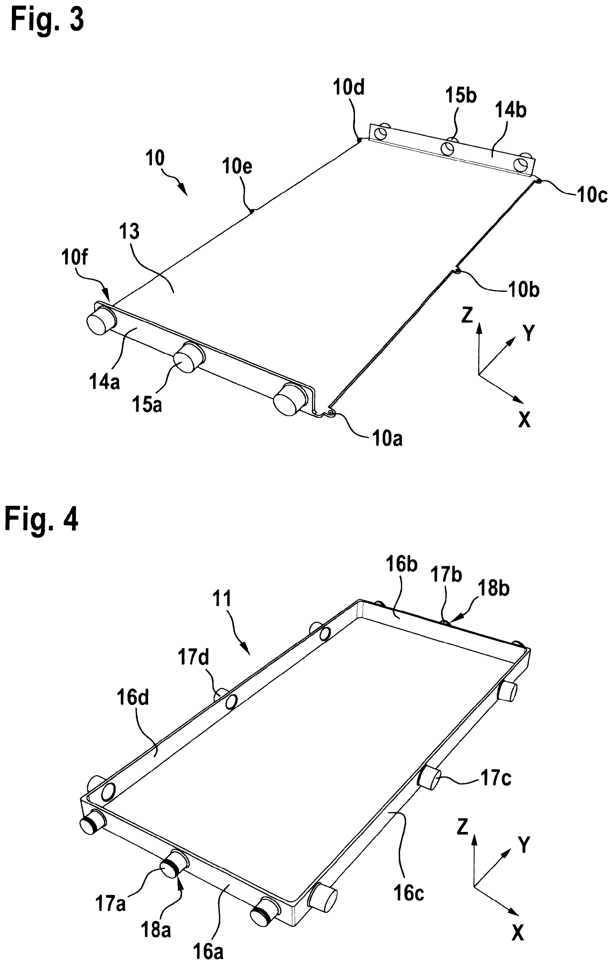

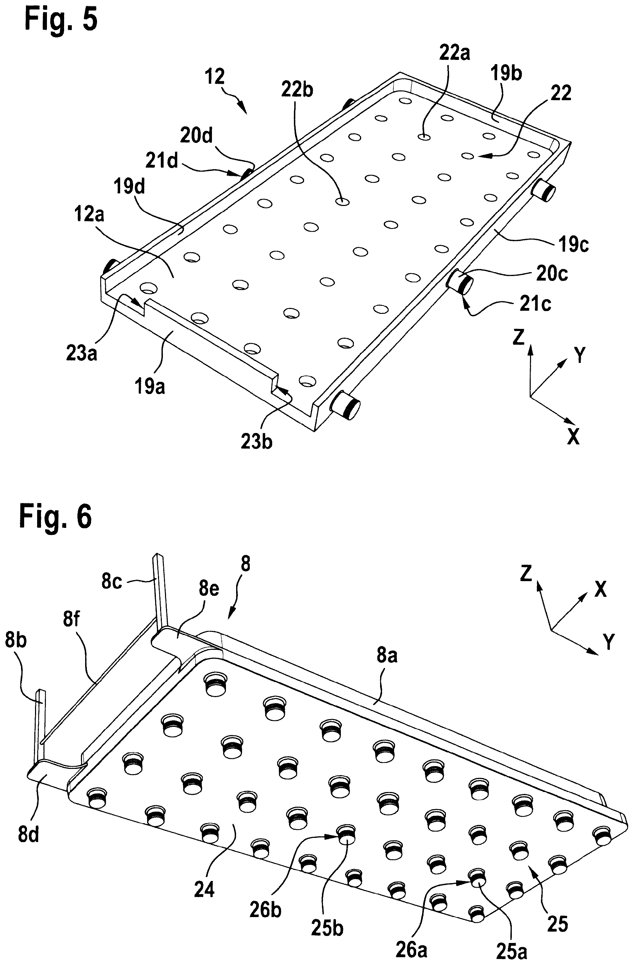

The floating body 8 is further described below with reference to Figure 6. The associated floating body support structure 9 and, more particularly, its constituent components are further described below with reference to Figure 3 to Figure 5.

More specifically, the vibration dampening device 7 is preferably provided for preventing transfer of vibrations occurring during operation of the helicopter 1 from the cabin floor 2c to the floating body 8. According to one aspect, the vibration dampening device 7 comprises a pneumatic shock absorber system 29 that couples the floating body 8 to the cabin floor 2c, and more particularly to an associated mounting device (10 in Figure 2) which is rigidly mounted to the cabin floor 2c. The pneumatic shock absorber system 29 comprises a plurality of pneumatic shock absorbers 28 and dampens the vibrations occurring during operation of the helicopter 1 for stabilizing the floating body 8 relative to the cabin floor 2c, i. e. relative to the associated mounting device (10 in Figure 2).

Figure 2 shows the vibration dampening structure 7 of Figure 1 with the floating body 8 and the floating body support structure 9 that comprises the pneumatic shock absorber system 29 with the plurality of pneumatic shock absorbers 28. Preferably, the floating body support structure 9 further comprises at least a mounting device 10 that is rigidly, preferentially removably, mountable to the helicopter 1 of Figure 1 and, more specifically, to the cabin floor 2c of the helicopter 1 of Figure 1. The mounting device 10 may be mounted to the cabin floor 2c of the helicopter 1 of Figure 1 by means of any suitable fixation means, such as screws, bolts, rivets and so on. However, other mounting techniques are likewise considered, such as e. g. welding and gluing by means of a suitable adhesive.

In order to enable mounting of the mounting device 10 to the cabin floor 2c of the helicopter 1 of Figure 1, a plurality of associate mounting flanges is provided. By way of example, three mounting flanges are visible in Figure 2 and labeled with the reference signs 10a, 10b, 10c. The mounting device 10 is further described below with reference to Figure 3.

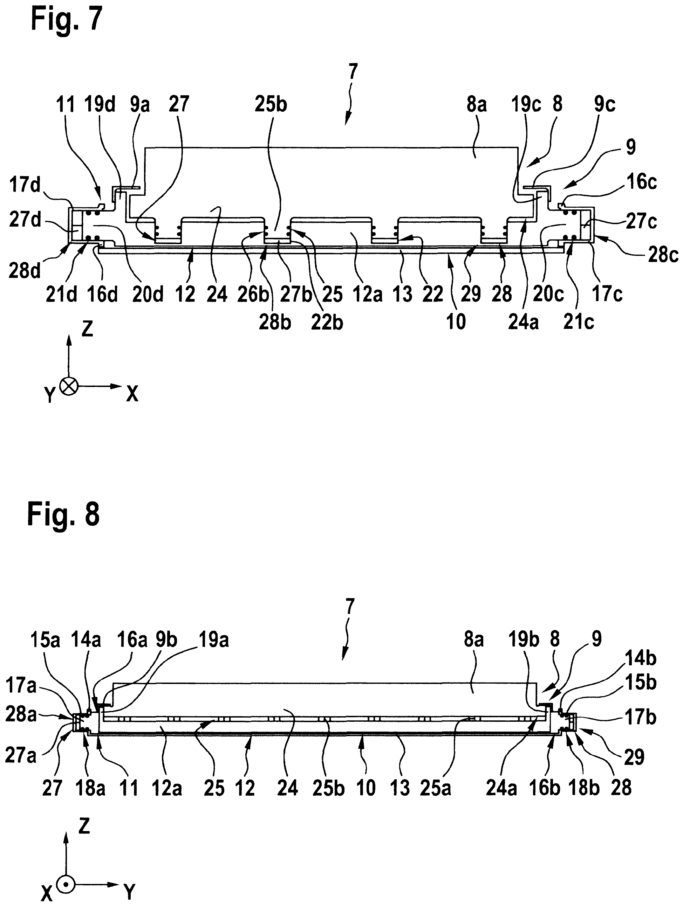

The mounting device 10 is coupled to a retaining frame 11 via a first predetermined number of pneumatic shock absorbers (28a in Figure 8) of the pneumatic shock absorber system 29. This first predetermined number of pneumatic shock absorbers (28a in Figure 8) is provided for a first Cartesian coordinate direction of the Cartesian coordinate system for dampening vibrations in the first Cartesian coordinate direction. Illustratively, this first Cartesian coordinate direction corresponds to the transversal direction of the helicopter 1 of Figure 1 along the Y-axis. The retaining frame 11 is further described below with reference to Figure 4.

The retaining frame 11 is, in turn, coupled to a floating body accommodation 12 via a second predetermined number of pneumatic shock absorbers (28c, 28d in Figure 7) of the pneumatic shock absorber system 29. This second predetermined number of pneumatic shock absorbers (28c, 28d in Fig. 7) is provided for a second Cartesian coordinate direction of the Cartesian coordinate system for dampening vibrations in the second Cartesian coordinate direction. Illustratively, this second Cartesian coordinate direction corresponds to the longitudinal direction of the helicopter 1 of Figure 1 that is defined by the X-axis. The floating body accommodation 12 is further described below with reference to Figure 5.

The floating body accommodation 12 is, in turn, preferably coupled to the floating body 8 via a third predetermined number of pneumatic shock absorbers (28b in Figure 7) of the pneumatic shock absorber system 29. This third predetermined number of pneumatic shock absorbers (28b in Figure 7) is preferably provided for a third Cartesian coordinate direction of the Cartesian coordinate system for dampening vibrations in the third Cartesian coordinate direction. Illustratively, this third Cartesian coordinate direction corresponds to the vertical direction of the helicopter 1 of Figure 1 that is defined by the Z-axis of the Cartesian coordinate system.

Furthermore, according to one aspect at least one floating body retainer is provided that retains the floating body 8 in the floating body accommodation 12. Preferably, four floating body retainers are provided, from which only floating body retainers 9a, 9b, 9c are visible in Figure 2. The floating body retainers 9a, 9b, 9c may be attached to the floating body accommodation 12 in any suitable manner that allows to retain the floating body 8 within the floating body accommodation 12. By way of example, and not for limiting the invention accordingly, suitable attachments may be embodied by means of welding, gluing or screwing.

According to one aspect, the floating body 8 is connected to at least one and, illustratively, to two lateral supports 8b, 8c. The latter are preferably provided to enable a vibration-free support of associated equipment, such as e. g. a camera or a sniper gun. For this purpose, the first and second lateral supports 8b, 8c may be interconnected via a flexible string 8f, wherein the flexible string 8f is provided to enable the vibration-free support of associated equipment. However, the present invention is not restricted to the flexible string 8f and other suitable interconnection means are likewise contemplated, such as e. g. a belt or a rope, both of which are preferably flexible.

According to one aspect, the floating body 8 comprises a floating platform 8a. The floating platform 8a preferably comprises a soft material, preferentially foam. Illustratively, the floating platform 8a is formed as a mat which is e. g. embodied such that a person may comfortably lay thereon, e. g. a sniper or a camera man. The floating body 8 is further described below with reference to Figure 6.

However, it should be noted that this configuration is only illustrative and not for restricting the invention accordingly, as any other shaping of the vibration dampening structure 7 may likewise be considered as long as it may be supplied with the pneumatic shock absorber system 29 according to the present invention. In other words, the vibration dampening structure 7 and, more specifically, the floating body 8 may likewise be square-shaped, oval, circular and so on.

Figure 3 shows the mounting device 10 of Figure 2 with the mounting flanges 10a, 10b, 10c. Furthermore, three other mounting flanges 10d, 10e, 10f are additionally shown.

According to one aspect, the plurality of mounting flanges 10a, 10b, 10c, 10d, 10e, 10f are integrally formed with a mounting platform 13 of the mounting device 10 and rigidly mountable to the helicopter 1 of Figure 1, i. e. to the cabin floor 2c of the helicopter 1 of Figure 1.

Illustratively, the mounting device 10 further comprises two retaining flanges 14a, 14b. By way of example, the retaining flanges 14a, 14b are mounted to the mounting platform 13 such that they are arranged at opposing axial ends of the mounting platform 13 in transversal direction of the helicopter 1 of Figure 1, i. e. in direction of the Y-axis. By arranging the retaining flanges 14a, 14b in an orthogonal manner with respect to the mounting platform 13, the latter forms together with the retaining flanges 14a, 14b a U-shaped arrangement.

Preferably, each one of the retaining flanges 14a, 14b is provided with at least one associated piston cup. Preferentially, two such piston cups and, illustratively, three such piston cups are provided on each one of the retaining flanges 14a, 14b. However, for simplicity of the drawings, only a single piston cup of the retaining flange 14a is representatively labeled with the reference sign 15a and only a single piston cup of the retaining flange 14b is representatively labeled with the reference sign 15b. The piston cups 15a, 15b extend in the transversal direction of the helicopter 1 of Figure 1 along the Y-axis.

It should be noted that the mounting platform 13 is exemplarily illustrated as a flat platform, but not for restricting the present invention accordingly. Instead, dependent on a configuration of e. g. the cabin floor 2c of the helicopter 1 of Figure 1, the mounting platform 13 may be adapted to an underlying structure of this cabin floor 2c.

Figure 4 shows the retaining frame 11 of Figure 2. Preferably, the retaining frame 11 comprises a predetermined number of frame profiles which are interconnected. By way of example, the retaining frame 11 comprises four frame profiles 16a, 16b, 16c, 16d, which are illustratively interconnected to form an open-frame structure.

Illustratively, this open-frame structure is rectangular and has an extension in transversal direction of the helicopter 1 of Figure 1 along the Y-axis that is greater than its extension in longitudinal direction of the helicopter 1 of Figure 1 along the X-axis.

Preferably, the frame profiles 16a, 16b are provided with a predetermined number of pistons that preferentially corresponds to the number of piston cups provided on the retaining flanges 14a, 14b of the mounting device 10 of Figure 3. In other words, the frame profiles 16a, 16b preferably comprise at least one, preferentially two and illustratively three pistons. By way of example, only one piston of the frame profile 16a is representatively labeled with the reference sign 17a and only a single piston of the frame profile 16b is representatively labeled with the reference sign 17b. The pistons 17a, 17b extend in the transversal direction of the helicopter 1 of Figure 1 along the Y-axis.

Preferably, each one of the pistons is provided with a suitable sealing member. The piston 17a is provided with a sealing member 18a and the piston 17b is provided with a sealing member 18b. The sealing member may e. g. be an O-ring that comprises an elastic material, such as e. g. rubber.

The pistons provided at the frame profiles 16a, 16b and their respective sealing members are preferably embodied such that the pistons and the sealing members may be introduced into the piston cups of the retaining flanges 14a, 14b of Figure 3. Preferentially, they may be introduced such that vibration dampening air-bed layers are formed within the piston cups of the retaining flanges 14a, 14b, as described below with reference to Figure 8.

Moreover, according to one aspect each one of the frame profiles 16c, 16d is provided with at least one, preferably two and illustratively three associated piston cups. By way of example and for purposes of simplicity of the drawings, only a single piston cup of the frame profile 16c is representatively labeled with the reference sign 17c and only a single piston cup provided on the frame profile 16d is representatively labeled with the reference sign 17d. The piston cups 17c, 17d extend in the longitudinal direction of the helicopter 1 of Figure 1 along the X-axis.

Figure 5 shows the floating body accommodation 12 of the vibration dampening structure 7 of Figure 2. Preferably, the floating body accommodation 12 comprises a bottom plate 12a that is provided with a plurality of piston cups 22. By way of example and for simplicity of the drawings, however, only two of the plurality of piston cups 22 are representatively labeled with the reference signs 22a, 22b.

The bottom plate 12a is preferably provided with associated retaining flanges 19a, 19b, 19c, 19d which are rigidly attached or integrally formed with the bottom plate 12a. Illustratively, the retaining flanges 19a, 19b, 19c, 19d form a frame-like structure that is exemplarily provided - in Figure 5 - on top of the bottom plate 12a. The retaining flange 19a preferably comprises two recesses 23a, 23b which are provided such that the mounting flanges 8d, 8e of the floating body 8 of Figure 2 may pass therethrough, respectively be arranged therein.

Each one of the retaining flanges 19c, 19d is preferably arranged with at least one, preferably two, and illustratively three pistons. Illustratively, and for simplicity of the drawings, however, only a single piston of the retaining flange 19c is representatively labeled with the reference sign 20c and only a single piston of the retaining flange 19d is representatively labeled with the reference sign 20d. Each one of the pistons is preferably provided with an associated sealing member. Illustratively, the piston 20c is provided with a sealing member 21c and the piston 20d is provided with a sealing member 21d. The sealing members 21c, 21d are preferentially embodied as O-rings or any other suitable sealing members, which may comprise rubber. The pistons 20c, 20d are illustratively arranged in the longitudinal direction of the helicopter 1 of Figure 1 along the X-axis. In contrast thereto, the plurality of piston cups 22 is arranged in the vertical direction of the helicopter 1 of Figure 1 along the Z-axis.

Figure 6 shows the floating body 8 of the vibration dampening structure 7 of Figure 2 with the floating platform 8a, the lateral supports 8b, 8c, the mounting flanges 8d, 8e and the flexible string 8f. According to one aspect, the floating body 8 further comprises a support plate 24 that is rigidly mounted to the floating platform 8a and, preferably, integrally formed therewith.

Preferably, the support plate 24 is provided with a plurality of pistons 25 which extend in the vertical direction of the helicopter 1 of Figure 1, i. e. along the Z-axis. However, for simplicity and clarity of the drawings only two of the plurality of pistons 25 are representatively labeled with reference signs 25a, 25b. These pistons 25a, 25b are respectively provided with associated sealing members 26a, 26b, which are again preferably formed as O-rings or any other suitable sealing members, which may comprise rubber.

According to one aspect, a respective number of pistons of the plurality of pistons 25 corresponds to a given number of piston cups of the plurality of piston cups 22 of the floating body accommodation 12 of Figure 5 such that each one of the plurality of pistons 25 is accommodated within a corresponding one of the plurality of piston cups 22 of Figure 5. By way of example, the pistons 25a, 25b with the sealing members 26a, 26b are accommodated in the piston cups 22a, 22b of the plurality of piston cups 22 of the floating body accommodation 12 of Figure 5 and form together with the latter respective air-bed layers, as described in more detail below with reference to Figure 7.

Figure 7 shows the vibration dampening structure 7 of Figure 2 with the mounting device 10 according to Figure 3, the retaining frame 11 according to Figure 4, the floating body accommodation 12 according to Figure 5 and the floating body 8 according to Figure 6. The retaining frame 11 illustratively comprises the piston cups 17c, 17d, the floating body accommodation 12 illustratively comprises the pistons 20c, 20d which are provided with the sealing members 21c, 21d, as well as the plurality of piston cups 22 with the piston cup 22b, and the floating body 8 illustratively comprises the plurality of pistons 25 with the piston 25b, which is provided with the sealing member 26b.

According to one aspect, the piston cups of the retaining frame 11 form with the pistons and their sealing members of the floating body accommodation 12 associated vibration dampening air-bed layers. By way of example, the piston cups 17c, 17d of the retaining frame 11 form with the pistons 20c, 20d and their sealing members 21c, 21d of the floating body accommodation 12 associated vibration dampening air-bed layers 27c, 27d. As described above, the piston cups 17c, 17d and the pistons 20c, 20d are oriented in the longitudinal direction of the helicopter 1 of Figure 1 by way of example, i. e. in direction of the X-axis, and form with the sealing members 21c, 21d and the associated vibration dampening air-bed layers 27c, 27d a predetermined number of pneumatic shock absorbers 28c, 28d that are illustratively oriented in the X-axis direction.

Furthermore, the plurality of piston cups 22 of the floating body accommodation 12 and the plurality of pistons 25 of the floating body 8 preferably form together respective vibration dampening air-bed layers which are illustratively arranged in the vertical direction of the helicopter 1 of Figure 1, i. e. in direction of the Z-axis. By way of example, the piston 25b and the associated sealing member 26b form with the piston cup 22b a vibration dampening air-bed layer 27b.

The piston 25b with the sealing member 26b, the associated piston cup 22b and the vibration dampening air-bed layer 27b form a pneumatic shock absorber 28b. More generally, the plurality of pistons 25 with their associated sealing members, the plurality of piston cups 25 and the respective vibration dampening air-bed layers form a predetermined number of pneumatic shock absorbers that are oriented in the Z-axis direction.

More generally, the predetermined number of pneumatic shock absorbers in the X-axis direction and the predetermined number of pneumatic shock absorbers in the Z-axis direction illustratively define at least partly the plurality of pneumatic shock absorbers 28 of Figure 1 and Figure 2. This plurality of pneumatic shock absorbers 28 comprises a plurality of vibration dampening air-bed layers 27, which is formed by the vibration dampening air-bed layers of the predetermined numbers of pneumatic shock absorbers in the X-axis direction and the vibration dampening air-bed layers of the predetermined number of pneumatic shock absorbers in the Z-axis direction.

Figure 7 further illustrates an exemplary constitution of the floating body 8 with the floating platform 8a and the floating body support plate 24 that is provided with the plurality of pistons 25. As described above, the floating body 8 is e. g. retained in the floating body accommodation 12 by means of the floating body retainers, from which only the floating body retainers 9a, 9c are visible in Figure 7, and which are rigidly mounted to the retaining flanges 19c, 19d of the floating body accommodation 12. Preferably, in order to enable the floating body retainers 9a, 9c to retain the floating body 8 in the floating body accommodation 12, the floating body 8 and, more specifically, preferably the floating body support plate 24 is provided with a frame-like lateral extension 24a. This frame-like lateral extension 24a is illustratively configured such that the floating body support plate 24 with the frame-like lateral extension 24a has outer dimensions which are greater than respective outer dimensions of the floating platform 8a such that the floating body retainers 9a, 9c may overlap with the frame-like lateral extension 24a in the vertical direction of the helicopter 1 of Figure 1, i. e. in direction of the Z-axis, and, thus, retain the floating body support plate 24 in the floating body accommodation 12.

Figure 8 shows the vibration dampening structure 7 of Figure 2 with the mounting device 10 of Figure 3, the retaining frame 11 of Figure 4, the floating body accommodation 12 of Figure 5 and the floating body 8 of Figure 6. The mounting device 10 comprises the piston cups 15a, 15b and the retaining frame 11 comprises the pistons 17a, 17b with the sealing members 18a, 18b. However, for simplicity and clarity of the drawings, illustration of the lateral supports 8b, 8c and the mounting flanges 8d, 8e with the flexible string 8f of the floating body 8 of Figure 6 is omitted.

According to one aspect, the piston cups of the mounting device 10 form with the pistons of the retaining frame 11 and their associated sealing members respective vibration dampening air-bed layers. The pistons and sealing members of the retaining frame 11 and the piston cups of the mounting device 10 form together with the respective vibration dampening air-bed layers a predetermined number of pneumatic shock absorbers which is oriented in the transversal direction of the helicopter 1 of Figure 1, i. e. in direction of the Y-axis. This predetermined number of pneumatic shock absorbers in the Y-axis direction is also part of the plurality of pneumatic shock absorbers 28 of Figure 1 and Figure 2.

More specifically, the piston 17a with its sealing member 18a of the retaining frame 11 illustratively forms with the piston cup 15a of the mounting device 10 a respective vibration dampening air-bed layer 27a. This respective vibration dampening air-bed layer 27a forms with the piston 17a, the sealing member 18a and the piston cup 15a illustratively a pneumatic shock absorber 28a in the Y-axis direction.

As can be derived from Figure 7 and Figure 8, the pneumatic shock absorber system 29 of the vibration dampening structure 7 according to the present invention is provided with the plurality of pneumatic shock absorbers 28 that consists of a predetermined number of shock absorbers which are oriented in the X-axis direction, as illustrated by way of example with respect to the pneumatic shock absorbers 28c, 28d, a predetermined number of pneumatic shock absorbers that is oriented in the Y-axis direction, as illustrated by way of example with respect to the pneumatic shock absorber 28a, and a predetermined number of pneumatic shock absorbers that is oriented in the Z-axis direction, as illustrated by way of example with respect to the pneumatic shock absorber 28b. In other words, the plurality of pneumatic shock absorbers 28 comprises a subset of pneumatic shock absorbers for each one of the three Cartesian coordinate directions X, Y, Z for dampening vibrations in a respective one of the three Cartesian coordinate directions X, Y, Z.

More specifically, the pneumatic shock absorbers 28c, 28d are provided for dampening vibrations in the X-axis direction, the pneumatic shock absorber 28a is provided for dampening vibrations in the Y-axis direction and the pneumatic shock absorber 28b is provided for dampening vibrations in the Z-axis direction. As described above, each one of the plurality of pneumatic shock absorbers 28 of the pneumatic shock absorber system 29 is formed by a piston with a sealing member which are accommodated in an associated piston cup and which form therewith a respective vibration dampening air-bed layer.

It should be noted that modifications to the above-described configurations are within the common knowledge of the person skilled in the art and, thus, also considered as being part of the present invention. For instance, in the vibration dampening structure 7 described above with reference to Figure 1 to Figure 8, the mounting device 10 and the retaining frame 11 provide together for vibration dampening in Y-axis direction and the retaining frame 11 and the floating body accommodation 12 provide together for vibration dampening in the X-axis direction. However, arrangement of respective pneumatic shock absorbers in the illustrated directions is merely for purposes of illustration and not for restricting the present invention accordingly, as e. g. the mounting device 10 and the retaining frame 11 could likewise be implemented for vibration dampening in X-axis direction, while the retaining frame 11 and the floating body accommodation 12 may be configured for vibration dampening in the Y-axis direction, and so on.

Similarly, all pistons and piston cups may also be inverted. In other words, by way of example, instead of providing the mounting device 10 with piston cups and the retaining frame 11 with associated pistons, the mounting device 10 may be provided with the pistons while the retaining frame is provided with the associated piston cups.

Furthermore, the number of pistons and associated piston cups in the different components of the vibration dampening structure 7 is also not restricted by the shown configurations. In other words, an underlying number of pistons and piston cups may freely be selected dependent on e. g. an underlying size of the vibration dampening structure 7 that is to be implemented. Moreover, a respectively chosen form and diameter which define a total surface of contact of the piston cups and the pistons for defining an attainable air pressure in corresponding vibration dampening air-bed layers is also freely selectable. For instance, while only cylinder-shaped pistons and piston cups are shown, which have a circular cross-section, also rectangular or any other polygonal cross-sections may likewise be selected.

Furthermore, it may also be preferred to manage resp. dampen only vibrations in two of the Cartesian coordinate directions, or even only one. For instance, if only vibration dampening in the Z-axis direction is desired, only the pneumatic shock absorbers 28b in the Z-axis direction according to Figure 7 may be implemented and so on.

Moreover, also the lateral supports 8b, 8c of the floating body 8 of Figure 6 may be adapted with respect to underlying mission-specific requirements. In other words, the mounting flanges 8d, 8e of the lateral supports 8b, 8c of the floating body 8 according to Figure 6 may be shortened or extended as required and, similarly, a respective height of the lateral supports 8b, 8c may be adjusted as required. In addition, also an underlying shape of the floating platform 8a may be varied according to mission- resp. operator-specific preferences. In other words, while a flat- and mat-shaped floating platform 8a is shown, it may be adapted to any ergonomic preferences or requirements. In other words, the shape of the floating platform 8a is preferably customizable.

### Reference List

- 1: rotary wing aircraft
- 1a: main rotor
- 2: fuselage
- 2a: tail boom
- 2b: cabin
- 2c: cabin floor
- 2d: starboard side wall
- 2e: bottom shell
- 2f: starboard side sliding door opening
- 2g: starboard side sliding door
- 2h: portside sliding door
- 3: counter-torque device
- 4: tail wing
- 5: fin
- 6: wheel-type landing gear
- 6a: wheel-type landing gear nose wheels
- 6b: wheel-type landing gear portside rear wheel
- 6c: wheel-type landing gear starboard side rear wheel
- 7: vibration dampening structure
- 8: floating body
- 8a: floating platform
- 8b, 8c: lateral supports
- 8d, 8e: mounting flanges
- 8f: flexible string
- 9: floating body support structure
- 9a, 9b, 9c: floating body retainers
- 10: mounting device
- 10a, 10b, 10c, 10d,10e, 10f: mounting flanges
- 11: retaining frame
- 12: floating body accommodation
- 12a: floating body accommodation bottom plate
- 13: mounting platform
- 14a, 14b: retaining flanges
- 15a, 15b: mounting platform piston cups
- 16a, 16b, 16c, 16d: frame profiles
- 17a, 17b: retaining frame pistons
- 17c, 17d: retaining frame piston cups
- 18a, 18b: sealing members
- 19a, 19b, 19c, 19d: retaining flanges
- 20c, 20d: floating body accommodation pistons
- 21c, 21d: sealing members
- 22, 22a, 22b: floating body accommodation bottom plate piston cups
- 23a, 23b: recesses
- 24: floating body support plate
- 24a: frame-like lateral extension
- 25, 25a, 25b: floating body support plate pistons
- 26a,: 26b sealing member
- 27, 27a, 27b, 27c, 27d: air-bed layers
- 28, 28a, 28b, 28c, 28d: pneumatic shock absorbers
- 29: pneumatic shock absorber system

## Claims

1. A vibration dampening structure (7) for dampening vibrations occurring during operation of a rotary wing aircraft (1), comprising:
a floating body (8); and
a floating body support structure (9) that supports the floating body (8), the floating body support structure (9) comprising:
a mounting device (10) that is rigidly mountable to the rotary wing aircraft (1); and
a pneumatic shock absorber system (29) that couples the floating body (8) to the mounting device (10) and dampens the vibrations occurring during operation of the rotary wing aircraft (1) for stabilizing the floating body (8) relative to the mounting device (10), and comprises a plurality of pneumatic shock absorbers (28), wherein a subset of pneumatic shock absorbers (28a, 28b, 28c, 28d) of the plurality of pneumatic shock absorbers (28) is provided for each one of three Cartesian coordinate directions (X, Y, Z) for dampening vibrations in a respective one of the three Cartesian coordinate directions (X, Y, Z),and wherein at least one of the plurality of pneumatic shock absorbers (28) comprises a piston (17a) with a sealing member (18a) and an associated piston cup (15a), wherein the piston (17a) and the associated piston cup (15a) form a vibration dampening air-bed layer (27a),
**characterized in that** the floating body support structure (9) further comprises:
a retaining frame (11) that is coupled to the mounting device (10) via a first predetermined number of pneumatic shock absorbers (28a) of the pneumatic shock absorber system (29), wherein the first predetermined number of pneumatic shock absorbers (28a) is provided for a first Cartesian coordinate direction (Y) of three Cartesian coordinate directions (X, Y, Z) for dampening vibrations in the first Cartesian coordinate direction (Y), and
a floating body accommodation (12) that is coupled to the retaining frame (11) via a second predetermined number of pneumatic shock absorbers (28c, 28d) of the pneumatic shock absorber system (29), wherein the second predetermined number of pneumatic shock absorbers (28c, 28d) is provided for a second Cartesian coordinate direction (X) of the three Cartesian coordinate directions (X, Y, Z) for dampening vibrations in the second Cartesian coordinate direction (X).

2. The vibration dampening structure (7) of claim 1,
**characterized in that** at least one of the first predetermined number of pneumatic shock absorbers (28a) comprises a piston (17a) with a sealing member (18a) and an associated piston cup (15a), wherein the piston (17a) and the associated piston cup (15a) form a vibration dampening air-bed layer (27a).

3. The vibration dampening structure (7) of claims 1 or 2,
**characterized in that** at least one of the second predetermined number of pneumatic shock absorbers (28c, 28d) comprises a piston (20c, 20d) with a sealing member (21c, 21d) and an associated piston cup (17c, 17d), wherein the piston (20c, 20d) and the associated piston cup (17c, 17d) form a vibration dampening air-bed layer (27c, 27d).

4. The vibration dampening structure (7) of any one of the preceding claims,
**characterized in that** the floating body (8) is coupled to the floating body accommodation (12) via a third predetermined number of pneumatic shock absorbers (28b) of the pneumatic shock absorber system (29), wherein the third predetermined number of pneumatic shock absorbers (28b) is provided for a third Cartesian coordinate direction (Z) of the three Cartesian coordinate directions (X, Y, Z) for dampening vibrations in the third Cartesian coordinate direction (Z).

5. The vibration dampening structure (7) of claim 4,
**characterized in that** at least one of the third predetermined number of pneumatic shock absorbers (28b) comprises a piston (25b) with a sealing member (26b) and an associated piston cup (22b), wherein the piston (25b) and the associated piston cup (22b) form a vibration dampening air-bed layer (27b).

6. The vibration dampening structure (7) of claim 4 or 5,
**characterized in that** at least one floating body retainer (9a, 9b, 9c) is provided that retains the floating body (8) in the floating body accommodation (12).

7. The vibration dampening structure (7) of any one of the preceding claims,
**characterized in that** the floating body (8) is connected to at least one lateral support (8b, 8c) that is provided to enable a vibration-free support of associated equipment.

8. The vibration dampening structure (7) of claim 7,
**characterized in that** the floating body (8) is connected to a first and a second lateral support (8b, 8c) which are interconnected via a flexible string (8f), wherein the flexible string (8f) is provided to enable the vibration-free support of associated equipment.

9. The vibration dampening structure (7) of claim 8,
**characterized in that** the floating body (8) comprises a floating platform (8a) that is mounted to an associated support plate (24), wherein the associated support plate (24) is provided with two mounting flanges (8d, 8e), the first and second lateral supports (8b, 8c) being attached to the mounting flanges (8d, 8e).

10. The vibration dampening structure (7) of claim 9,
**characterized in that** the floating platform (8a) comprises a soft material, preferably foam.

11. The vibration dampening structure (7) of any one of the preceding claims,
**characterized in that** the mounting device (10) comprises a mounting platform (13) that is provided with a plurality of mounting flanges (10a, 10b, 10c, 10d, 10e, 10f), wherein the plurality of mounting flanges (10a, 10b, 10c, 10d, 10e, 10f) is rigidly mountable to the rotary wing aircraft (1).

## Patentansprüche

1. Schwingungsdämpfende Struktur (7) zum Dämpfen von Schwingungen, die während des Betriebs eines Drehflügelflugzeugs (1) auftreten, umfassend:
einen Schwimmkörper (8); und
eine Schwimmkörper-Tragstruktur (9), die den Schwimmkörper (8) trägt, wobei die Schwimmkörper-Tragstruktur (9) umfasst:
eine Befestigungsvorrichtung (10), die starr an dem Drehflügelflugzeug (1) montierbar ist; und
ein pneumatisches Stoßdämpfersystem (29), das den Schwimmkörper (8) mit der Befestigungsvorrichtung (10) koppelt und die während des Betriebs des Drehflügelflugzeugs (1) auftretenden Schwingungen dämpft, um den Schwimmkörper (8) relativ zu der Befestigungsvorrichtung (10) zu stabilisieren, und eine Mehrzahl von pneumatischen Stoßdämpfern (28) umfasst, wobei eine Teilmenge von pneumatischen Stoßdämpfern (28a, 28b, 28c, 28d) der Mehrzahl von pneumatischen Stoßdämpfern (28) jeder der drei kartesischen Koordinatenrichtungen (X, Y, Z) zugeordnet ist, um Schwingungen in jeweils einer der drei kartesischen Koordinatenrichtungen (X, Y, Z) zu dämpfen, und wobei mindestens einer der Mehrzahl von pneumatischen Stoßdämpfern (28) einen Kolben (17a) mit einem Dichtungselement (18a) und einen zugeordneten Kolbentopf (15a) umfasst, wobei der Kolben (17a) und der zugeordnete Kolbentopf (15a) eine schwingungsdämpfende Luftbettschicht (27a) bilden,
**dadurch gekennzeichnet, dass** die Schwimmkörper-Tragstruktur (9) ferner umfasst:
einen Halterahmen (11), der über eine erste vorgegebene Anzahl von pneumatischen Stoßdämpfern (28a) des pneumatischen Stoßdämpfersystems (29) mit der Montagevorrichtung (10) gekoppelt ist, wobei die erste vorgegebene Anzahl von pneumatischen Stoßdämpfern (28a) für eine erste kartesische Koordinatenrichtung (Y) von drei kartesischen Koordinatenrichtungen (X, Y, Z) zur Dämpfung von Schwingungen in der ersten kartesischen Koordinatenrichtung (Y) vorgesehen ist, und
eine Schwimmkörperaufnahme (12), die über eine zweite vorgegebene Anzahl von pneumatischen Stoßdämpfern (28c, 28d) des pneumatischen Stoßdämpfersystems (29) mit dem Halterahmen (11) gekoppelt ist, wobei die zweite vorgegebene Anzahl von pneumatischen Stoßdämpfern (28c, 28d) für eine zweite kartesische Koordinatenrichtung (X) der drei kartesischen Koordinatenrichtungen (X, Y, Z) zur Dämpfung von Schwingungen in der zweiten kartesischen Koordinatenrichtung (X) vorgesehen ist.

2. Schwingungsdämpfende Struktur (7) nach Anspruch 1,
**dadurch gekennzeichnet, dass** mindestens einer der ersten vorgegebenen Anzahl von pneumatischen Stoßdämpfern (28a) einen Kolben (17a) mit einem Dichtungselement (18a) und einen zugeordnete Kolbentopf (15a) umfasst, wobei der Kolben (17a) und der zugeordnete Kolbentopf (15a) eine schwingungsdämpfende Luftbettschicht (27a) bilden.

3. Schwingungsdämpfende Struktur (7) nach Anspruch 1 oder 2,
**dadurch gekennzeichnet, dass** mindestens einer der zweiten vorgegebenen Anzahl von pneumatischen Stoßdämpfern (28c, 28d) einen Kolben (20c, 20d) mit einem Dichtungselement (21c, 21d) und einen zugeordneten Kolbentopf (17c, 17d) umfasst, wobei der Kolben (20c, 20d) und der zugeordnete Kolbentopf (17c, 17d) eine schwingungsdämpfende Luftbettschicht (27c, 27d) bilden.

4. Schwingungsdämpfende Struktur (7) nach einem der vorhergehenden Ansprüche,
**dadurch gekennzeichnet, dass** der Schwimmkörper (8) über eine dritte vorgegebene Anzahl von pneumatischen Stoßdämpfern (28b) des pneumatischen Stoßdämpfersystems (29) mit der Schwimmkörperaufnahme (12) gekoppelt ist, wobei die dritte vorgegebene Anzahl von pneumatischen Stoßdämpfern (28b) für eine dritte kartesische Koordinatenrichtung (Z) der drei kartesischen Koordinatenrichtungen (X, Y, Z) zur Dämpfung von Schwingungen in der dritten kartesischen Koordinatenrichtung (Z) vorgesehen ist.

5. Schwingungsdämpfende Struktur (7) nach Anspruch 4,
**dadurch gekennzeichnet, dass** mindestens einer der dritten vorgegebenen Anzahl von pneumatischen Stoßdämpfern (28b) einen Kolben (25b) mit einem Dichtungselement (26b) und einen zugeordneten Kolbentopf (22b) umfasst, wobei der Kolben (25b) und der zugeordnete Kolbentopf (22b) eine schwingungsdämpfende Luftbettschicht (27b) bilden.

6. Schwingungsdämpfende Struktur (7) nach Anspruch 4 oder 5,
**dadurch gekennzeichnet, dass** mindestens ein Schwimmkörperhalter (9a, 9b, 9c) vorgesehen ist, der den Schwimmkörper (8) in der Schwimmkörperaufnahme (12) hält.

7. Schwingungsdämpfende Struktur (7) nach einem der vorhergehenden Ansprüche,
**dadurch gekennzeichnet, dass** der Schwimmkörper (8) mit mindestens einer seitlichen Abstützung (8b, 8c) verbunden ist, die vorgesehen ist, um eine schwingungsfreie Abstützung zugeordneter Geräte zu ermöglichen.

8. Schwingungsdämpfende Struktur (7) nach Anspruch 7,
**dadurch gekennzeichnet, dass** der Schwimmkörper (8) mit einer ersten und einer zweiten seitlichen Stütze (8b, 8c) verbunden ist, die über einen flexiblen Strang (8f) miteinander verbunden sind, wobei der flexible Strang (8f) vorgesehen ist, um die schwingungsfreie Abstützung zugeordneter Geräte zu ermöglichen.

9. Schwingungsdämpfende Struktur (7) nach Anspruch 8,
**dadurch gekennzeichnet, dass** der Schwimmkörper (8) eine schwimmende Plattform (8a) umfasst, die an einer zugeordneten Trägerplatte (24) angebracht ist, wobei die zugeordnete Trägerplatte (24) mit zwei Montageflanschen (8d, 8e) versehen ist und die erste und die zweite seitliche Stütze (8b, 8c) an den Montageflanschen (8d, 8e) angebracht sind.

10. Schwingungsdämpfende Struktur (7) nach Anspruch 9,
**dadurch gekennzeichnet, dass** die schwimmende Plattform (8a) ein weiches Material, vorzugsweise Schaumstoff, umfasst.

11. Schwingungsdämpfende Struktur (7) nach einem der vorhergehenden Ansprüche,
**dadurch gekennzeichnet, dass** die Montagevorrichtung (10) eine Montageplattform (13) umfasst, die mit einer Mehrzahl von Montageflanschen (10a, 10b, 10c, 10d, 10e, 10f) versehen ist, wobei die Mehrzahl von Montageflanschen (10a, 10b, 10c, 10d, 10e, 10f) starr an dem Drehflügelflugzeug (1) montierbar ist.

## Revendications

1. Structure d'amortissement de vibrations (7) pour amortir des vibrations apparaissant lors du fonctionnement d'un aéronef à voilure tournante (1), et comprenant :
. un corps flottant (8) ; et
. une structure de support de corps flottant (9) qui soutient le corps flottant (8), la structure de support de corps flottant (9) comprenant :
un dispositif de montage (10) pouvant être monté de façon rigide sur l'aéronef à voilure tournante (1) ; et
un système d'amortisseurs pneumatiques (29) qui couple le corps flottant (8) au dispositif de montage (10) et amortit les vibrations qui apparaissent lors du fonctionnement de l'aéronef à voilure tournante (1) pour stabiliser le corps flottant (8) par rapport au dispositif de montage (10), et comprend une pluralité d'amortisseurs pneumatiques (28), dans laquelle un sous-ensemble d'amortisseurs pneumatiques (28a, 28b, 28c, 28d) de la pluralité d'amortisseurs pneumatiques (28) est prévu pour chacune parmi trois directions de coordonnées cartésiennes (X, Y, Z) pour amortir les vibrations suivant respectivement l'une parmi les trois directions de coordonnées cartésiennes (X, Y, Z), et dans laquelle au moins un parmi la pluralité d'amortisseurs pneumatiques (28) comprend un piston (17a) avec un élément d'étanchéité (18a) et une cuvette de piston (15a) associée, dans laquelle le piston (17a) et la cuvette de piston (15a) associée forment une couche de coussin d'air amortissant les vibrations (27a),
**caractérisée en ce que** la structure de support de corps flottant (9) comprend en outre :
un cadre de retenue (11) qui est couplé au dispositif de montage (10) via un premier nombre prédéterminé d'amortisseurs pneumatiques (28a) du système d'amortisseurs pneumatiques (29), dans laquelle le premier nombre prédéterminé d'amortisseurs pneumatiques (28a) est prévu pour une première direction de coordonnées cartésiennes (Y) parmi les trois directions de coordonnées cartésiennes (X, Y, Z) pour amortir les vibrations suivant la première direction de coordonnées cartésiennes (Y), et
un logement de corps flottant (12) qui est couplé au cadre de retenue (11) via un deuxième nombre prédéterminé d'amortisseurs pneumatiques (28c, 28d) du système d'amortisseurs pneumatiques (29), dans laquelle le deuxième nombre prédéterminé d'amortisseurs pneumatiques (28c, 28d) est prévu pour une deuxième direction de coordonnées cartésiennes (X) parmi les trois directions de coordonnées cartésiennes (X, Y, Z) pour amortir les vibrations suivant la deuxième direction de coordonnées cartésiennes (X).

2. Structure d'amortissement de vibrations (7) selon la revendication 1,
**caractérisée en ce qu'**au moins un amortisseur parmi le premier nombre prédéterminé d'amortisseurs pneumatiques (28a) comprend un piston (17a) avec un élément d'étanchéité (18a) et une cuvette de piston (15a) associée, dans laquelle le piston (17a) et la cuvette de piston (15a) associée forment une couche de coussin d'air amortissant les vibrations (27a).

3. Structure d'amortissement de vibrations (7) selon l'une des revendications 1 ou 2,
**caractérisée en ce qu'**au moins un amortisseur parmi le deuxième nombre prédéterminé d'amortisseurs pneumatiques (28c, 28d) comprend un piston (20c, 20d) avec un élément d'étanchéité (21c, 21d) et une cuvette de piston (17c, 17d), associée, dans laquelle le piston (20c, 20d) et la cuvette de piston (17c, 17d) associée forment une couche de coussin d'air amortissant les vibrations (27c, 27d).

4. Structure d'amortissement de vibrations (7) selon l'une quelconque des revendications précédentes,
**caractérisée en ce que** le corps flottant (8) est couplé au logement de corps flottant (12) via un troisième nombre prédéterminé d'amortisseurs pneumatiques (28b) du système d'amortisseurs pneumatiques (29), dans laquelle le troisième nombre prédéterminé d'amortisseurs pneumatiques (28b) est prévu pour une troisième direction de coordonnées cartésiennes (Z) parmi les trois directions de coordonnées cartésiennes (X, Y, Z) pour amortir les vibrations suivant la troisième direction de coordonnées cartésiennes (Z).

5. Structure d'amortissement de vibrations (7) selon la revendication 4,
**caractérisée en ce qu'**au moins un amortisseur parmi le troisième nombre prédéterminé d'amortisseurs pneumatiques (28b) comprend un piston (25b) avec un élément d'étanchéité (26b) et une cuvette de piston (22b) associée, dans laquelle le piston (25b) et la cuvette de piston (22b) associée forment une couche de coussin d'air amortissant les vibrations (27b).

6. Structure d'amortissement de vibrations (7) selon la revendication 4 ou 5,
**caractérisée en ce qu'**au moins un dispositif de retenue de corps flottant (9a, 9b, 9c) est prévu pour retenir le corps flottant (8) dans le logement de corps flottant (12).

7. Structure d'amortissement de vibrations (7) selon l'une quelconque des revendications précédentes,
**caractérisée en ce que** le corps flottant (8) est raccordé à au moins un support latéral (8b, 8c) qui est prévu pour apporter un support dénué de vibrations aux équipements associés.

8. Structure d'amortissement de vibrations (7) selon la revendication 7,
**caractérisée en ce que** le corps flottant (8) est raccordé à un premier et à un second support latéral (8b, 8c) qui sont raccordés entre eux via un lien flexible (8f), dans laquelle le lien flexible (8f) est prévu pour apporter ledit support dénué de vibrations aux équipements associés.

9. Structure d'amortissement de vibrations (7) selon la revendication 8,
**caractérisée en ce que** le corps flottant (8) comprend une plate-forme flottante (8a) qui est montée sur une plaque de support (24) associée, dans laquelle la plaque de support (24) associée est prévue avec deux brides de montage (8d, 8e), les premier et second supports latéraux (8b, 8c) étant fixés aux brides de montage (8d, 8e).

10. Structure d'amortissement de vibrations (7) selon la revendication 9,
**caractérisée en ce que** la plate-forme flottante (8a) comprend un matériau élastique, de préférence une mousse.

11. Structure d'amortissement de vibrations (7) selon l'une quelconque des revendications précédentes,
**caractérisée en ce que** le dispositif de montage (10) comprend une plate-forme de montage (13) qui est prévue avec une pluralité de brides de montage (10a, 10b, 10c, 10d, 10e, 10f), dans laquelle la pluralité de brides de montage (10a, 10b, 10c, 10d, 10e, 10f) peut être montée de façon rigide à l'aéronef à voilure tournante (1).
